# FASCICULE DE BREVET EUROPEEN

(11) **EP 0 936 545 B1**
(45) Date de publication et mention de la délivrance du brevet: **08.02.2006**
(21) Numéro de dépôt: 99400338.2
(22) Date de dépôt: 11.02.1999
(51) Int. Cl.: G06F 9/46

(54) **Procédé et dispositif de suivi de la répartition de tâches de processus informatiques dans une machine multiprocesseur, et machine comportant ou ayant utilisé un tel dispositif**
Verfahren und Vorrichtung zur Überwachung von Tasksverteilung zwischen Rechnerprozessen in einem Multiprozessorsystem und System mit einer solchen Vorrichtung
Method and apparatus for monitoring tasks distribution of computer processes in a multiprocessor system and system with such an apparatus

(30) Priorité: 12.02.1998 FR 9801703
(43) Date de publication de la demande: 18.08.1999
(73) Titulaire: BULL S.A., 78430 Louveciennes (FR)
(72) Inventeur: Loncan, Martine, 38330 Saint-Nazaire les Eymes (FR)

(56) Documents cités:
- US-A- 5 408 650
- US-A- 5 437 047

## Description

La présente invention se situe dans le domaine des machines informatiques multiprocesseur.

Elle concerne plus particulièrement un procédé de suivi des tâches de processus informatiques, ou threads en terminologie anglo-saxonne, afin de connaître avec précision leur répartition sur les processeurs pendant l'exécution d'un programme de test ou benchmark en terminologie anglo-saxonne, mettant à l'épreuve les capacités spécifiques de la machine et restituant le résultat du test en termes compréhensibles pour l'utilisateur.

Elle concerne également un dispositif de suivi de répartition des tâches, une machine multiprocesseur et une machine multiprocesseur multimodulaire comportant ou ayant utilisé un tel dispositif.

La description qui va suivre s'intéressera plus particulièrement mais non exclusivement à une machine du type CC-NUMA , abréviations anglo-saxonnes pour Cache Coherent Non-Uniform Memory Acces et qui définissent une machine comportant une mémoire à accès non uniforme et à cohérence antémémoire.

Sur les machines comprenant de nombreux processeurs, des algorithmes dits d'affinité permettent notamment d'attribuer aux processeurs des tâches qui leur ont été précédemment attribuées et qui ont laissé des empreintes, ou traces en terminologie anglo-saxonne, dans leur antémémoire.

Ces algorithmes permettent de minimiser les pertes de temps dues à la récupération des informations respectives à une précédente tâche attribuée dans un précédent contexte d'exécution, et consignées dans l'antémémoire du processeur.

Une architecture multimodulaire est une architecture de machine comportant plusieurs modules ; chaque module comportant un ou plusieurs processeurs.

Chaque module comporte en plus d'une mémoire physique, une zone mémoire à accès rapide, appelée également antémémoire de niveau 3, et qui est commune à tous les processeurs d'un même module.

Dans ce type d'architecture, il est souhaitable qu'une tâche qui ne peut pas être attribuée au processeur sur lequel elle a été attribuée en dernier, puissent l'être sur un processeur appartenant au même module.

A partir de cette architecture, dans laquelle les tâches peuvent migrer entre des modules et donc entre un grand nombre de processeurs, il devient intéressant de suivre la répartition des différentes tâches au sein des différents processeurs afin de pouvoir tester la validité des algorithmes d'affinité définis ci-dessus.

Les résultats d'un tel suivi peuvent être ensuite exploités notamment pour optimiser la répartition des tâches quand il est possible d'associer une tâche à un processeur déterminé dans le but, par exemple, de tester une base de données.

Un tel dispositif de suivi de répartition des tâches trouve ses principales applications comme outil de test des performances d'une machine pendant sa mise au point ou comme outil d'optimisation des performances de la machine tout au long de sa vie.

Dans cette dernière application, il peut faire partie intégrante de la machine.

On connaît des dispositifs permettant d'assurer un suivi sans pour autant valider les algorithmes d'affinité et qui d'autre part sont très lourds à mettre en oeuvre et perturbent considérablement le système d'exploitation de la machine.

Un des inconvénients de ces dispositifs de suivi, est que c'est une tâche déterminée qui assure la fonction de suivi, ce qui prend un temps considérable et perturbe la dynamique de chargement de la machine.

En effet, ces dispositifs de suivi manipulent un grand nombre d'indicateurs, ou verrous, activés et maintenus par le processeur qui exécute la fonction dispatch pour empêcher qu'un autre processeur exécute la même fonction tant que la répartition précédente n'est pas complètement terminée.

Enfin, ils ne sont pas adaptés à une structure multimodulaire.

Il est ainsi connu par le document US 5 408 650 un système complexe analysant des événements de la mémoire. Il est également connu par le document US 5 437 047 un système de contrôle des tâches qui exige la collecte de nombreux indicateurs.

L'invention a notamment pour but de pallier ces inconvénients.

Dans les dispositifs de suivi, quand le système d'exploitation recherche quelle nouvelle tâche il va exécuter, il regarde d'abord la priorité affectée à chaque tâche.

Parmi les tâches de même priorité, le système d'exploitation élit de préférence celle qui a une forte affinité avec le processeur pour lequel il effectue la fonction de répartition de tâches, appelée également fonction dispatch.

Il est même possible de régler les paramètres du système d'exploitation pour que les tâches moins prioritaires, mais ayant une affinité plus forte avec le processeur, soient exécutées en premier.

C'est ce qui est appelé dans le concept d'algorithme d'affinité, une forte affinité ou strong affinity en terminologie anglo-saxonne.

Avec l'introduction de la notion d'architecture modulaire et d'antémémoire de niveau 3, s'il n'y a pas de processeur ayant une forte affinité avec une tâche déterminée, il peut être intéressant de trouver un processeur appartenant au même module et sur lequel la tâche a été attribuée dernièrement ; la tâche ayant laissée une empreinte dans son antémémoire de niveau 3.

C'est ce qui est appelé dans le concept d'algorithme d'affinité, une faible affinité ou weak affinity en terminologie anglo-saxonne.

Dans une architecture multimodulaire, il est ainsi intéressant d'étudier la migration des tâches entre les différents processeurs, dans le but d'observer notamment les effets de l'introduction du concept de faible affinité.

Le but de l'invention est de faire en sorte que chaque tâche qui est attribuée à un processeur laisse une empreinte dans une zone mémoire allouée à chaque processeur en perturbant faiblement, mais de manière identique, chaque tâche.

A cet effet, l'invention a pour premier objet, un procédé de suivi de tâches de processus informatiques sur des processeurs dans une machine multiprocesseur comportant un noyau appelant une fonction dispatch qui est la fonction de répartition des tâches sur les processeurs.

Le procédé est caractérisé en ce qu'il consiste, à chaque appel de la fonction dispatch par le noyau, à dérouter cette fonction vers une extension du noyau dans laquelle chaque processeur consigne dans une zone mémoire déterminée, allouée à chaque processeur, des informations respectives à la tâche qui lui est destinée.

La fonction de déroutage selon l'invention consiste :
- à exécuter le code de la fonction dispatch d'origine ;
- à consigner les informations relatives à la tâche dans la zone mémoire; et
- à envoyer des demandes de vidage des zones mémoire.

Selon une caractéristique de l'invention, les informations relatives aux tâches consignées dans les zones mémoire sont :
- l'identifiant de la tâche qui a été attribuée ;
- l'identifiant du processus auquel appartient la tâche ; et
- un indicateur de temps permettant de connaître a posteriori, l'ordre d'exécution de la tâche.

Le procédé consiste, en outre, à exploiter les informations consignées dans les zones mémoire, allouées à chaque, pour les représenter sous forme d'un résumé de journal permettant la visualisation de la répartition des tâches parmi l'ensemble des processeurs de la machine.

Il consiste pour cela :
- à vider à une cadence déterminée le contenu des zones mémoire ;
- à stocker les informations contenues dans les zones mémoire dans un fichier déterminé ; et
- à partir de ces informations, à visualiser les résultats du suivi.

L'invention a pour deuxième objet un dispositif de suivi de répartition des tâches de processus informatiques sur des processeurs dans une machine multiprocesseur comportant un noyau appelant une fonction dispatch qui est la fonction de répartition des tâches sur les processeurs.

Ce dispositif comporte une extension noyau comportant :
- des moyens pour dérouter la fonction dispatch d'origine du noyau tout en sauvegardant le contexte d'origine d'exécution de la tâche ;
- des moyens pour consigner l'empreinte du passage d'une tâche dans une zone mémoire déterminée, allouée à chaque processeur, sans perturber le contexte d'exécution de la fonction dispatch d'origine ;
- des moyens pour restituer le contexte d'origine de la fonction dispatch ;
- des moyens pour vider, à une cadence déterminée, le contenu des zones mémoire ;
- des moyens pour stocker les informations contenues dans les zones mémoire dans un fichier déterminé ; et
- des moyens pour exploiter les informations du fichier permettant à l'utilisateur de visualiser le résultat du suivi.

L'invention a pour troisième objet, une machine informatique multiprocesseur comportant un noyau appelant une fonction dispatch qui est la fonction de répartition des tâches sur les processeurs de la machine.

La machine comporte un dispositif de suivi de répartition des tâches, comportant :
- des moyens pour dérouter la fonction dispatch d'origine du noyau tout en sauvegardant le contexte d'appel de la fonction dispatch ;
- des moyens de consignation pour consigner l'empreinte du passage d'une tâche dans une zone mémoire déterminée, allouée à chaque processeur, sans perturber le contexte d'exécution de la fonction dispatch d'origine ;
- des moyens pour restituer le contexte d'appel de la fonction dispatch ;
- des moyens pour vider, à une cadence déterminée, le contenu des zones mémoire ;
- des moyens pour stocker les informations contenues dans les zones mémoire dans un fichier déterminé ; et
- des moyens pour exploiter les informations du fichier permettant à l'utilisateur de visualiser le résultat du suivi.

L'invention a notamment pour avantage de visualiser la répartition des tâches sur les processeurs en fournissant un résumé construit à partir du journal de cette répartition.

Ce résumé permet de valider les algorithmes d'affinité et le bon équilibrage des charges sur les processeurs.

L'invention permet également, durant un chargement de la machine de pouvoir discriminer deux processus possédant le même identifiant.

En effet, s'il est évident de discriminer deux tâches ayant le même identifiant mais pas le même identifiant de processus associé, il est moins évident de discriminer deux processus ayant le même identifiant.

Le procédé selon l'invention permet également de soulager un traitement lors de l'optimisation des performances de bases de données, par exemple, en déterminant quels sont les processeurs à atteindre et à quel endroit on peut les atteindre.

Un autre avantage est que le procédé selon l'invention, perturbe peu le fonctionnement du système d'exploitation de la machine pendant le suivi, lequel s'effectue de façon quasi transparente vis à vis du système.

Enfin, l'implémentation matérielle nécessaire à la mise en oeuvre du procédé de suivi selon l'invention, ne modifie pas fondamentalement la structure interne de la machine informatique.

D'autres avantages et caractéristiques de la présente invention apparaîtront à la lecture de la description qui suit faite en référence aux figures annexées qui représentent :
- la figure 1, un exemple d'architecture de type CC-NUMA pour une machine comportant quatre modules ;
- la figure 2, un schéma de principe du procédé de suivi selon l'invention ; et
- les figure 3 et 4, un tableau affichant un résumé du journal d'un suivi restitué par le dispositif de suivi selon l'invention dans l'exemple d'une machine comportant deux modules, chaque module comportant deux processeurs.

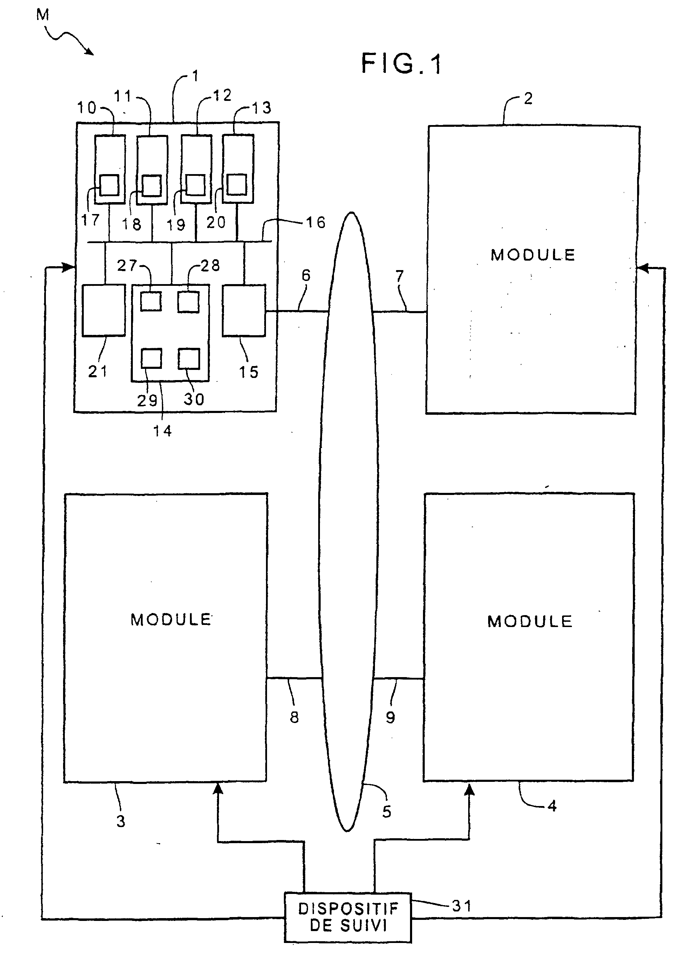

La figure 1 illustre schématiquement un exemple de machine M, dont l'architecture est de type CC-NUMA.

Elle comporte quatre modules respectivement référencés 1 à 4, interconnectés au moyen d'un anneau 5 respectivement via les liaisons 6 à 9.

La description qui suit faite en référence à la figure 1 reste valable pour un nombre quelconque de modules compris typiquement entre deux et huit. Au delà de huit modules, l'architecture devient plus complexe.

L'interconnexion des modules 1 à 4, permet de faire des transactions entre modules en utilisant un protocole de cohérence de mémoire.

Les quatre modules 1 à 4, ayant une structure interne identique, seul le module référencé 1 sera décrit.

Le module 1 comporte quatre processeurs 10 à 13, une mémoire physique locale 14 et un organe 15 gérant la communication d'informations entre les différents modules 1 à 4.

Les différents éléments du module 1 sont reliés entre eux par un bus interne 16, appelé bus système.

Chaque processeur 10 à 13, comporte respectivement une antémémoire privée, interne et/ou externe 17 à 20, de niveau 1 et 2.

Le module 1 comporte en outre une antémémoire d'accès à distance 21, appelée également antémémoire de niveau 3, couplée au bus système 16.

La notion d'antémémoire étant connue, on rappellera simplement qu'une antémémoire comporte essentiellement une zone de mémoire à accès rapide et une table de correspondance d'adresses non représentée sur la figure 1.

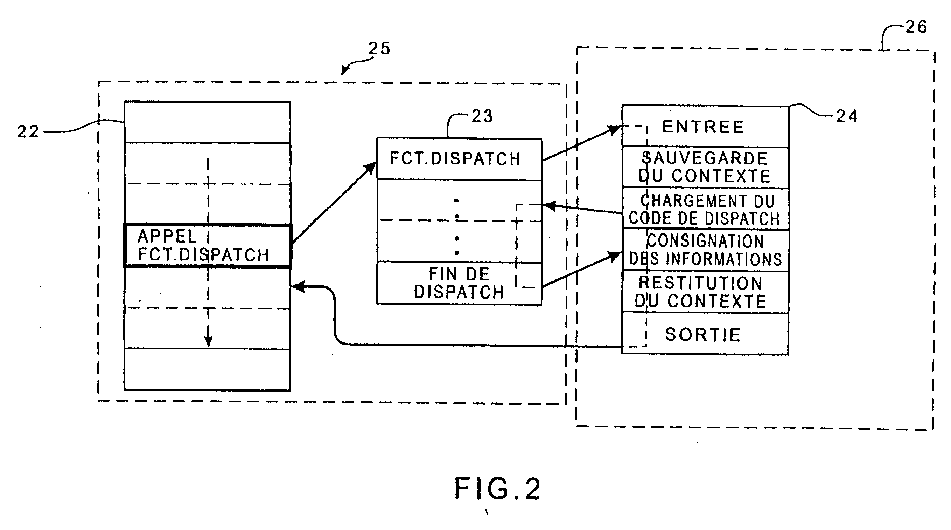

La figure 2 illustre schématiquement le principe de déroutage et la fonction de déroutage mises en oeuvre par le procédé selon l'invention.

Sur cette figure, trois blocs principaux d'instructions 22, 23 et 24, sont représentés.

Le premier bloc 22 matérialise la succession des instructions d'appel de la fonction dispatch dans le temps, symbolisé par une flèche en trait discontinu, et l'appel de la fonction dispatch à un instant déterminé, par exemple pendant une interruption.

Le deuxième bloc 23 matérialise la suite des instructions de la fonction dispatch d'origine appelée par le premier bloc 22.

Les premier et deuxième blocs 22 et 23 font partie intégrante du noyau 25 du système d'exploitation de la machine, représenté sur la figure par une ligne fermée discontinue.

La notion de noyau étant connue, on rappellera simplement que le noyau est le coeur de la machine regroupant les principales commandes du système d'exploitation, inaccessibles pour l'utilisateur sauf au moyen d'appels système protégés.

Enfin, le troisième bloc 24 matérialise la suite des instructions de déroutage et de suivi de répartition des tâches de la fonction dispatch déroutée, implémentée par le procédé selon l'invention.

Le troisième bloc 24, se greffant sur le noyau 25, est une partie d'une extension noyau 26 représentée sur la figure par une ligne fermée discontinue.

L'extension noyau 26 comporte en outre ses propres fonctions d'initialisation et de sortie, les fonctions d'activation du déroutage et divers utilitaires qui ne sont pas représentés sur la figure.

Le principe de déroutage est connu en soi. Il est toutefois décrit ci-après appliqué à la fonction de déroutage selon l'invention.

Dans une première étape, la première instruction du code de la fonction dispatch d'origine est écrasée par un branchement.

Ce branchement est fait vers la première instruction du code de la fonction dispatch déroutée si le branchement est réalisable en une instruction.

Il est fait vers une partie réservée de la fonction dispatch d'origine si les codes des deux fonctions, fonction d'origine et fonction déroutée, sont trop distants. La partie réservée de la fonction dispatch d'origine est située après son code, traceback en terminologie anglo-saxonne, et générée automatiquement par le compilateur. C'est alors dans cette zone que s'effectue le branchement vers le code de la fonction déroutée.

Dans une deuxième étape, quand la fonction déroutée appelle la fonction originale, elle appelle en fait un code tampon ou glue-code, qui permet de restituer la première instruction de la fonction d'origine (celle qui avait été écrasée par le branchement) avant de se brancher sur la deuxième instruction.

L'avantage d'un tel code est de pouvoir être exécuté automatiquement sans pour cela modifier le noyau 25. En effet, aucune compilation du noyau 25 n'est nécessaire.

Dans une troisième étape, lors du retour de la fonction dispatch d'origine, l'adresse de retour (l'appelant de la fonction dispatch d'origine) est sauvegardée et le retour se fait vers la fonction déroutée. Ceci se fait dans une autre partie du glue-code.

Enfin, dans une quatrième étape, la fonction dispatch déroutée retourne automatiquement vers l'appelant de la fonction dispatch d'origine.

Le contexte qui est un contexte d'appel, est donc constitué de la première instruction de la fonction dispatch d'origine, et de l'adresse de retour.

La fonction dispatch 23 est exécutée par chacun des processeurs 10 à 13 du module 1 ainsi que les processeurs, non représentés, des autres modules 2 à 4 de la machine M.

Chaque processeur détermine quelle tâche il va exécuter. Les tâches sont rangées dans une ou plusieurs files d'attente dans le cas d'une machine à noyau multimodulaire où il y a une file d'attente par module. Les tâches sont attribuées aux processeurs selon une loi déterminée.

A chaque appel de la fonction dispatch 22, la fonction dispatch originale 23 est déroutée sur l'extension noyau 26.

Les processeurs 10 à 13 consignent alors, dans des zones déterminées de la mémoire virtuelle qui leur sont respectivement allouées des informations respectives aux tâches qui leur ont été attribuées. Ces zones sont matérialisées sur la figure 1 par les blocs 27 à 30.

Comme le suivi selon l'invention doit être le plus transparent possible, il doit donc être rapide dans son exécution.

A chaque fois qu'une tâche quelconque est attribuée à un processeur 10 à 13, elle laisse une empreinte dans la mémoire virtuelle.

La totalité de la mémoire allouée pour l'empreinte est conservée en permanence dans la mémoire physique 14 du module 1.

A chaque exécution de la fonction dispatch 23, par exemple, à chaque interruption ou de façon cyclique au maximum environ toutes les 10 ms, un enregistrement est sauvegardé dans la zone mémoire 27 à 30 allouée au processeur 10 à 13.

Un enregistrement comprend typiquement:
- l'identifiant TID de la tâche qui est attribuée à un processeur ;
- l'identifiant PID du processus auquel la tâche appartient ; et
- l'heure précise de son passage sur le processeur.

Chaque processeur 10 à 13, comporte au moins une zone mémoire 27 à 30 qui lui est allouée pour consigner l'enregistrement de la tâche.

Ces zones mémoire 27 à 30 sont des segments de mémoire virtuelle qui définissent des espaces d'adressage virtuels.

Ceci permet de minimiser les temps d'accès à la mémoire centrale de la machine.

Quand les zones mémoire 27 à 30 sont pleines, elles sont vidés par un démon (tâche en veille qui est activée par un événement déterminé), indépendant, et les informations issues des zones mémoire sont stockées dans un fichier déterminé.

Il y a autant de démons indépendants que de processeurs. Chaque démon est affecté a une zone mémoire déterminée 27 à 30, ce qui permet un gain de temps en attente de disponibilité de verrous au cas ou plusieurs zones mémoire 27 à 30 devraient être vidées en même temps.

La fonction dispatch déroutée 24 consiste donc pour résumer à exécuter le code de la fonction dispatch d'origine 23, à consigner les informations relatives à la tâche qui va être attribuée au processeur 17 à 20, et à envoyer à au démon chargé de vider sa zone mémoire 27 à 30, une demande de vidage.

A un instant donné, le contenu des zones mémoire 27 à 30 permet de donner non seulement le pourcentage de temps que chaque tâche a passé sur chaque processeur 17 à 20, mais également le nombre de fois que chaque tâche a changé de processeur 10 à 13 et, éventuellement de modules 1 à 4.

Les informations du fichier sont ensuite exploitées par le dispositif 31 représenté sur la figure 1 pour visualiser, par exemple sous la forme d'un tableau, le résumé du journal de la répartition des tâches sur les processeurs à un instant déterminé ou sur un intervalle de temps déterminé.

Le résultat du suivi permet notamment d'identifier quelles sont les tâches qui migrent le plus entre les processeurs, et qui ont donc perdu le plus de temps à récupérer les données contenues dans leur antémémoire.

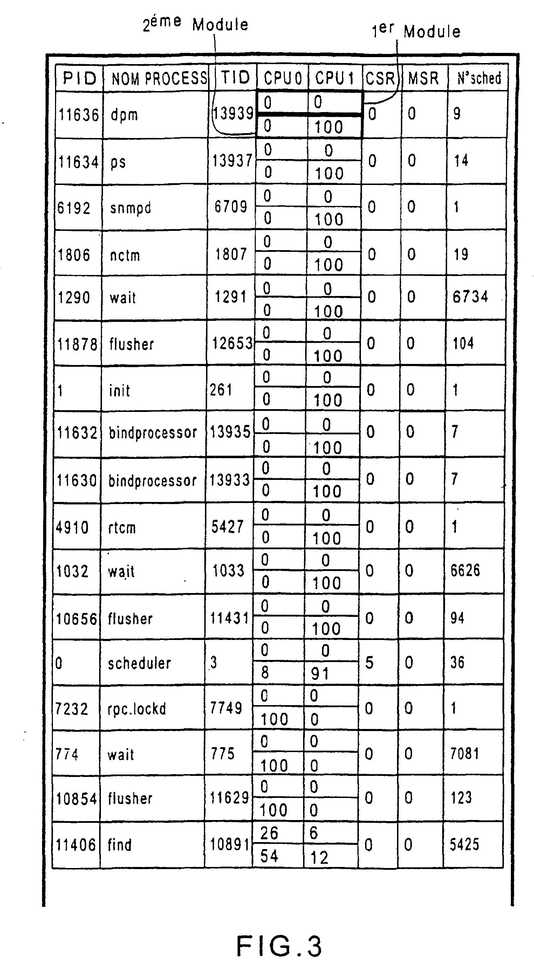

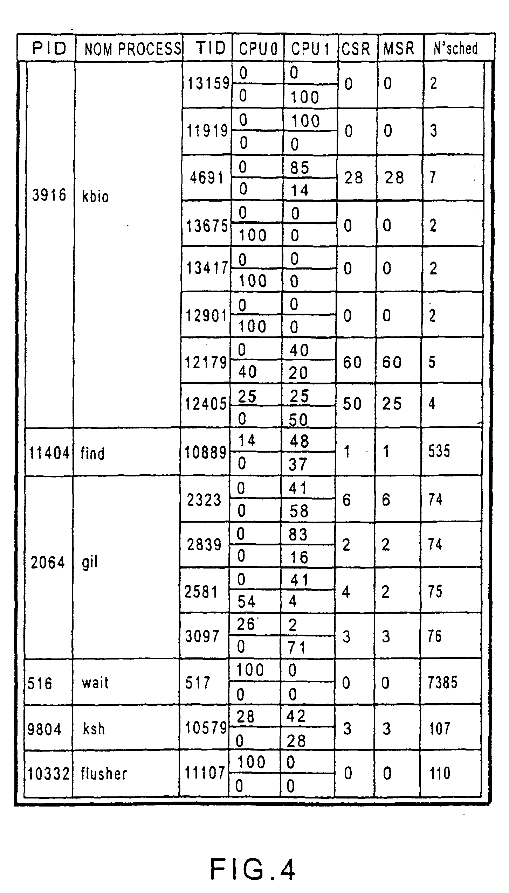

Les figures 3 et 4, illustrent sous la forme d'un tableau, un exemple de résultat du suivi selon l'invention ; le tableau de la figure 4 étant la suite du tableau de la figure 3.

Ce tableau affiche le résultat du suivi sur quatre processeurs dans une machine comportant un premier et un deuxième modules ; chaque module comportant deux processeurs CPU0 et CPU1.

Les informations manipulées par le dispositif de suivi sont :
- l'identifiant de la tâche qui a été dispatchée TID ;
- l'identifiant du processus PID ; et
- un indicateur de temps permettant de connaître a posteriori l'ordre d'exécution de la tâche.

Les informations affichées sont, outre les TID et PID, le nom du processus et le numéro des processeurs, CPU0 et CPU1, respectivement pour le premier et le deuxième module.

Les noms des processus sont ici donnés à titre purement indicatif.

Les valeurs des colonnes CPU, abréviations anglo-saxonnes pour Central Processing Unit, sont indiquées en pourcentages. Ils ne correspondent pas à une répartition temporelle des tâches sur les processeurs car il n'est pas possible de connaître le temps exact passé par chaque tâche sur chaque processeur du fait des multiples interruptions.

Les pourcentages de temps sont calculés à partir du nombre de fois qu'une tâche a été attribuée à un processeur déterminé.

Ce suivi a été réalisé en l'absence de tout chargement. Il permet de visualiser le temps CPU passé par une ou plusieurs tâches d'un processus.

L'indicateur N° sched permet de connaître le nombre de fois qu'une tâche a été attribuée

L'indicateur CSR, abréviations anglo-saxonnes pour CPU Switch Rate, correspond au rapport du nombre de fois qu'une tâche a changé de CPU avec le nombre de fois que la tâche a été attribuée.

Cet indicateur permet de chiffrer le poids du concept de forte affinité.

L'indicateur MSR, abréviations anglo-saxonnes pour Module Switch Rate, correspond au rapport du nombre de fois qu'une tâche a changé de module avec le nombre de fois qu'une tâche a été attribuée.

Cet indicateur permet de chiffrer l'impact du concept de faible affinité.

L'exploitation d'un tel tableau, pourrait permettre par exemple, dans le cas ou une tâche utilisant beaucoup de temps CPU (N° sched important) divisait son temps entre les quatre processeurs, en passant constamment de l'un à l'autre (CSR élevé), de déduire qu'un gain de temps considérable pourrait être réalisé en forçant cette tâche a être attribuée à un processeur déterminé.

La présente invention n'est bien sur pas limitée à ce nombre de processeurs et peut s'appliquer typiquement à seize processeurs répartis sur quatre modules (typiquement quatre processeurs par module).

## Revendications

1. Procédé de suivi de tâches de processus informatiques sur des processeurs (10 à 13) dans une machine multiprocesseur (M) comportant un noyau (25) appelant (22) une fonction dispatch (23) qui est la fonction de répartition des tâches sur les processeurs (10 à 13), **caractérisé en ce qu'**il consiste, à chaque appel (22) de la fonction dispatch (23) par le noyau (25), à dérouter cette fonction vers une extension du noyau (26) dans laquelle chaque processeur (10 à 13) consigne dans une zone mémoire (27 à 30) déterminée, allouée à chaque processeur (10 à 13), des informations respectives à la tâche qui lui est destinée.

2. Procédé selon la revendication 1, **caractérisé en ce qu'**il consiste dans la fonction de déroutage (24) :
- à exécuter te code de la fonction dispatch d'origine (23) :
- à consigner les informations relatives à la tâche dans la zone mémoire (27 à 30) allouée à chaque processeur (10 à 13) ; et
- à envoyer des demandes de vidage des zones mémoire (27 à 30).

3. Procédé selon l'une quelconque des revendications 1 et 2, **caractérisé en ce** les informations rotatives aux tâches consignées dans les zones mémoire (27 à 30) sont:
- l'identifiant (TIO) de la tâche qui a été attribuée;
- l'identifiant (PIO) du processus auquel appartient la tâche; et
- un indicateur de temps permettant de connaître a posteriori, l'ordre d'exécution de la tâche.

4. Procédé selon l'une quelconque des revendications 1 à 3, **caractérisé en ce qu'**il consiste en outre, à exploiter les informations consignées dans les zones mémoire (27 à 30) pour les représenter sous forme d'un résumé de journal permettant la visualisation de la répartition des tâches parmi l'ensemble des processeurs (10 à 13) de la machine (M).

5. Procédé selon la revendication 4, **caractérisé en ce qu'**il consiste: - à vider à une cadence déterminée les zones mémoire (27 à 30) ;
- à stocker les informations contenues dans les zones mémoire (27 à 30) dans un fichier déterminé: et
- à partir de ces informations, à visualiser le résultat du suivi.

6. Dispositif de suivi (31) de répartition des tâches de processus informatiques sur les processeurs (10 à 13) d'une machine multiprocesseur (M) comportant un noyau (25) appelant une fonction dispatch (23) qui est la fonction de répartition des tâches sur les processeurs (10 à 13), **caractérisé en ce qu'**il comporte:
- des moyens pour dérouter la fonction dispatch d'origine (23) du noyau (25) en sauvegardant le contexte d'appel (22) de la fonction dispatch (23) ;
- des moyens pour consigner l'empreinte du passage d'une tâche dans une zone mémoire (27 à 30) déterminée, allouée à chaque processeur (10 à 13), sans perturber le contexte d'exécution de la fonction dispatch d'origine (22) ;
- des moyens pour restituer le contexte d'appel (22) de la fonction dispatch (23) ;
- des moyens pour vider, à une cadence déterminée, le contenu des zones mémoire (27 à 30) ;
- des moyens pour stocker les informations contenues dans les zones mémoire (27 à 30) dans un fichier déterminé; et
- des moyens pour exploiter les informations du fichier permettant à l'utilisateur de visualiser le résultat du suivi.

7. Machine (M) informatique multiprocesseur comportant un noyau (25) appelant une fonction dispatch (23) qui est la fonction de répartition de tâches de processus informatiques sur les processeurs de la machine. **caractérisée en ce qu'**elle comporte un dispositif de suivi (31) de répartition des tâches comportant:
- des moyens pour dérouter la fonction dispatch (23) d'origine du noyau (25) tout en sauvegardant le contexte d'appel (22) de la fonction dispatch (23) ;
- des moyens de consignation pour consigner l'empreinte du passage d'une tâche dans une zone mémoire (27 à 30) déterminée, allouée à chaque processeur (10 à 13), sans perturber le contexte d'exécution de la fonction dispatch d'origine (23) ;
- des moyens pour restituer le contexte d'appel (22) de la fonction dispatch (23) ;
- des moyens pour vider, à une cadence déterminée, le contenu des zones mémoire;
- des moyens pour stocker les informations contenues dans les zones mémoire (27 à 30) dans un fichier déterminé; et
- des moyens pour exploiter les informations du fichier permettant à l'utilisateur de visualiser le résultat du suivi.

8. Machine (M) informatique multiprocesseur selon la revendication 7, **caractérisée en ce qu'**elle est multimodulaire, le noyau appelant une fonction dispatch (23) qui est la fonction de répartition de tâches de processus informatiques sur les processeurs des modules (1 à 4) de la machine, l'empreinte du passage d'une tâche sur un processeur (10 à 13) étant consignée par les moyens de consignation.

## Claims

1. Method for tracking computer process jobs on processors (10 to 13) in a multiprocessor machine (M) comprising a kernel (25) calling (22) a dispatch function (23) that is the function of scheduling the jobs on the processors (10 to 13), **characterised in that** it consists, each time the dispatch function (23) is called (22) by the kernel (25), in diverting this function to an extension of the kernel (26), in which each processor (10 to 13) logs in a predetermined memory zone (27 to 30), allocated to each processor (10 to 13), information relating to the job that is intended for it.

2. Method according to Claim 1, **characterised in that** it consists in the diversion function (24):
- executing the code of the original dispatch function (23);
- logging information relating to the job in the memory zone (27 to 30) allocated to each processor (10 to 13); and
- sending requests to dump the memory zones (27 to 30).

3. Method according to any one of Claims 1 and 2, **characterised in that** the information relating to the jobs logged in the memory zones (27 to 30) is:
- the identifier (TIO) of the job that has been allocated;
- the identifier (PIO) of the process to which the job belongs; and
- a time indicator making it possible to know subsequently the order in which the job has been executed.

4. Method according to any one of Claims 1 to 3, **characterised in that** it also consists in exploiting the information logged in the memory zones (27 to 30) in order to represent them in the form of a journal summary making it possible to display how the jobs have been scheduled among all the processors (10 to 13) of the machine (M).

5. Method according to Claim 4, **characterised in that** it consists in:
- dumping the memory zones (27 to 30) at a predetermined rate;
- storing the information contained in the memory zones (27 to 30) in a predetermined file; and
- on the basis of this information, displaying the result of tracking.

6. Device for tracking (31) the scheduling of computer process jobs on the processors (10 to 13) of a multiprocessor machine (M) comprising a kernel (25) calling a dispatch function (23), which is the function of scheduling jobs on the processors (10 to 13), **characterised in that** it comprises:
- means for diverting the original dispatch function (23) of the kernel (25) while saving the calling context (22) of the dispatch function (23);
- means for logging the impression of the passage of a job in a predetermined memory zone (27 to 30), allocated to each processor (10 to 13), without disturbing the context of execution of the original dispatch function (22);
- means for restoring the calling context (22) of the dispatch function (23);
- means for dumping, at a predetermined rate, the content of the memory zones (27 to 30);
- means for storing the information contained in the memory zones (27 to 30) in a predetermined file; and
- means for exploiting the information in the file allowing the user to display the result of tracking.

7. Multiprocessor data-processing machine (M) comprising a kernel (25) calling a dispatch function (23), which is the function of scheduling computer process jobs on the processors of the machine, **characterised in that** it comprises a device for tracking (31) the scheduling of the jobs comprising:
- means for diverting the original dispatch function (23) of the kernel (25) while saving the calling context (22) of the dispatch function (23);
- logging means for logging the impression of the passage of a job into a predetermined memory zone (27 to 30), allocated to each processor (10 to 13), without disturbing the context of execution of the original dispatch function (23);
- means for restoring the calling context (22) of the dispatch function (23);
- means for dumping, at a predetermined rate, the content of the memory zones;
- means for storing the information contained in the memory zones (27 to 30) in a predetermined file; and
- means for exploiting the information in the file allowing the user to display the result of tracking.

8. Multiprocessor data-processing machine (M) according to Claim 7, **characterised in that** it is multimodular, the kernel calling a dispatch function (23), which is the function of scheduling computer process jobs on the processors of the modules (1 to 4) of the machine, the impression of the passage of a job on a processor (10 to 13) being logged by the logging means.

## Patentansprüche

1. Verfahren zum Verfolgen von Tasks von Datenverarbeitungsprozessen in Prozessoren (10 bis 13) in einer Multiprozessormaschine (M), die einen Kern (25) enthält, der eine Dispatch-Funktion (23) aufruft (22), die die Funktion der Verteilung der Tasks auf die Prozessoren (10 bis 13) ist, **dadurch gekennzeichnet, dass** es bei jedem Aufruf (22) der Dispatch-Funktion (23) durch den Kern (25) darin besteht, diese Funktion zu einer Erweiterung des Kerns (26) umzuleiten, in der jeder Prozessor (10 bis 13) in eine bestimmte Speicherzone (27 bis 30), die jedem Prozessor (10 bis 13) zugewiesen ist, Informationen, die auf den für ihn vorgesehenen Task bezogen sind, einträgt.

2. Verfahren nach Anspruch 1, **dadurch gekennzeichnet, dass** es in der Umleitungsfunktion (24) darin besteht:
- den Code der ursprünglichen Dispatch-Funktion (23) auszuführen;
- die auf den Task bezogenen Informationen in die jedem Prozessor (10 bis 13) zugewiesene Speicherzone (27 bis 30) einzutragen; und
- Anforderungen zum Leeren der Speicherzone (27 bis 30) zu verschicken.

3. Verfahren nach einem der Ansprüche 1 und 2, **dadurch gekennzeichnet, dass** die Informationen, die auf die in den Speicherzonen (27 bis 30) eingetragenen Tasks bezogen sind, umfassen:
- den Identifizierer (TIO) des Tasks, der zugewiesen worden ist;
- den Identifizierer (PIO) des Prozesses, zu dem der Task gehört; und
- einen Zeitanzeiger, der im Nachhinein die Ausführungsreihenfolge des Tasks zu kennen ermöglicht.

4. Verfahren nach einem der Ansprüche 1 bis 3, **dadurch gekennzeichnet, dass** es außerdem darin besteht, die in die Speicherzonen (27 bis 30) eingetragenen Informationen auszuwerten, um sie in Form einer Berichtszusammenfassung zu präsentieren, die die Sichtbarmachung der Verteilung der Tasks auf die Gesamtheit der Prozessoren (10 bis 13) der Maschine (M) ermöglicht.

5. Verfahren nach Anspruch 4, **dadurch gekennzeichnet, dass** es darin besteht:
- die Speicherzonen (27 bis 30) mit einem vorgegebenen Takt zu leeren;
- die in den Speicherzonen (27 bis 30) enthaltenen Informationen in einer bestimmten Datei zu speichern; und
- anhand dieser Informationen das Verfolgungsergebnis sichtbar zu machen.

6. Vorrichtung (31) zum Verfolgen der Verteilung der Tasks von Datenverarbeitungsprozessen in den Prozessoren (10 bis 13) einer Multiprozessormaschine (M), die einen Kern (25) enthält, der eine Dispatch-Funktion (23) aufruft, die die Funktion der Verteilung der Tasks auf die Prozessoren (10 bis 13) ist, **dadurch gekennzeichnet, dass** sie umfasst:
- Mittel zum Umleiten der ursprünglichen Dispatch-Funktion (23) des Kerns (25) unter Sicherung des Aufrufkontexts (22) der Dispatch-Funktion (23);
- Mittel zum Eintragen der Durchlaufspur eines Tasks in eine bestimmte Speicherzone (27 bis 30), die jedem Prozessor (10 bis 13) zugewiesen ist, ohne den Ausführungskontext der ursprünglichen Dispatch-Funktion (22) zu stören;
- Mittel zum Wiederherstellen des Aufrufkontexts (22) der Dispatch-Funktion (23);
- Mittel, die mit einem bestimmten Takt den Inhalt der Speicherzonen (27 bis 30) leeren;
- Mittel zum Speichern der in den Speicherzonen (27 bis 30) enthaltenen Informationen in einer bestimmten Datei; und
- Mittel zum Auswerten der Informationen der Datei, was dem Anwender ermöglicht, das Verfolgungsresultat sichtbar zu machen.

7. Multiprozessor-Datenverarbeitungsmaschine (M), die einen Kern (25) enthält, der eine Dispatch-Funktion (23) aufruft, die die Funktion der Verteilung von Tasks von Datenverarbeitungsprozessen auf die Prozessoren der Maschine ist, **dadurch gekennzeichnet, dass** sie eine Vorrichtung (31) zum Verfolgen der Verteilung der Tasks enthält, die umfasst:
- Mittel zum Umleiten der ursprünglichen Dispatch-Funktion (23) des Kerns (25) unter Sicherung des Aufrufkontexts (22) der Dispatch-Funktion (23);
- Eintragungsmittel zum Eintragen der Durchlaufspur eines Tasks in eine bestimmte Speicherzone (27 bis 30), die jedem Prozessor (10 bis 13) zugewiesen ist, ohne den Ausführungskontext der ursprünglichen Dispatch-Funktion (23) zu stören;
- Mittel zum Wiederherstellen des Aufrufkontexts (22) der Dispatch-Funktion (23);
- Mittel, die den Inhalt der Speicherzonen in einem vorgegebenen Takt leeren;
- Mittel, die die in den Speicherzonen (27 bis 30) enthaltenen Informationen in einer bestimmten Datei speichern; und
- Mittel, die die Informationen der Datei auswerten, was dem Anwender ermöglicht, das Verfolgungsergebnis sichtbar zu machen.

8. Multiprozessor-Datenverarbeitungsmaschine (M) nach Anspruch 7, **dadurch gekennzeichnet, dass** sie multimodular ist, wobei der Kern eine Dispatch-Funktion (23) aufruft, die die Funktion der Verteilung von Tasks von Datenverarbeitungsprozessen auf die Prozessoren der Module (1 bis 4) der Maschine ist, wobei die Durchlaufspur eines Tasks in einem Prozessor (10 bis 13) durch die Eintragungsmittel eingetragen wird.
